# EUROPÄISCHE PATENTSCHRIFT

(11) **EP 0 844 959 B1**
(45) Veröffentlichungstag und Bekanntmachung des Hinweises auf die Patenterteilung: **10.02.1999**
(21) Anmeldenummer: 96931752.8
(22) Anmeldetag: 10.08.1996
(51) Int. Cl.: B62D 55/20

(54) **RAUPENFAHRWERK**
TRACKLAYING TRUCK
TRAIN DE ROULEMENT A CHENILLES

(30) Priorität: 18.08.1995 DE 19530379
(43) Veröffentlichungstag der Anmeldung: 03.06.1998
(73) Patentinhaber: Höfflinger, Werner, 50769 Köln (DE)
(72) Erfinder: Höfflinger, Werner, 50769 Köln (DE)
(74) Vertreter: Gramm, Werner, Prof. Dipl.-Ing.
(86) Internationale Anmeldenummer: DE9601522
(87) Internationale Veröffentlichungsnummer: WO9707010

(56) Entgegenhaltungen:
- EP-A- 0 525 187
- CH-A- 316 059
- DE-A- 3 922 923

## Beschreibung

Die Erfindung betrifft ein Raupenfahrwerk für insbesondere landwirtschaftliche Fahrzeuge zum Betrieb auf und abseits von Straßen, mit einem endlosen, um zumindest zwei Umlenkräder geführten Umlaufelement, das zumindest ein endloses, fortlaufend biegsames, mit den Umlenkrädern zusammenwirkendes Zugelement sowie parallel dazu zumindest eine Reihe einzelner, jeweils biegesteif ausgebildeter Tragelemente aufweist, auf denen sich zumindest zwei in Umlaufrichtung hintereinander angeordnete Laufrollen abstützen.

Ein solches Fahrwerk ist aus den DE-PS 590 149 und 625 710 (Kegresse) bekannt. Dort wird eine Stützrollenanordnung bzw. ein Laufband beschrieben, wobei das Umlaufelement aus einem oder mehreren Riemen besteht, die mit den Umlenkrädern formschlüssig zusammenwirken. Seitlich daneben sind zusätzliche, aus Metallplatten bestehende, mit den Laufrollen zusammenwirkende Laufflächen vorgesehen. Durch diese Anordnungen sollen Verbesserungen erreicht werden sowohl gegenüber Gliederketten (Polygoneffekt mit ungleichförmigem Lauf und Verschleiß insbesondere bei hohen Fahrgeschwindigkeiten) als auch gegenüber Gurtbändern (Walkeffekt im Gurtband und in nachgiebigen Fahrbahnen wie Äckern oder Wiesen).

Die kurze Teilung der Metallplatten und der mit diesen verbundenen Verzahnungen reduziert zwar den Polygoneffekt, kann ihn aber nicht gänzlich vermeiden. Da die einzelnen, biegsam miteinander verbundenen Platten bzw. Stollen durch die weiter beabstandeten Laufrollen fortlaufend wechselnden Be- und Entlastungen unterworfen sind, tritt der Walkeffekt unter den Laufrollen konzentriert in den Fugen zwischen den Metallplatten auf. Bei einem solchen Fahrwerk ist eine gleichzeitige Minimierung von Polygon- und Walkeffekt nicht möglich, da ersteres eine möglichst kurze, letzteres aber eine möglichst lange Teilung voraussetzen würde.

Die Begrenzung der Umlaufverformung der Riemen auf die Fugen zwischen den Metallplatten führt neben dem Polygoneffekt an diesen Stellen auch zu einem schnellen Verschleiß der nicht mehr fortlaufend biegsamen Riemen. Die weit außen (DE-PS 590 149) oder in Einschnitten (DE-PS 625 710) liegenden Laufbahnen für die Laufrollen sind abseits der Straße verschmutzungsgefährdet. Die vollflächige Ausführung des Laufbandes führt neben dem bereits genannten Walkeffekt abseits der Straße zu relativ hohen Bodenverdichtungen und ist zur Übertragung großer Zugkräfte mit niedrigem Schlupf ungeeignet.

Der dringende Bedarf insbesondere der Landwirtschaft an kostengünstigen, verlustarmen, abseits der Straße bodenschonenden und zugkräftigen und auf der Straße auch bei höheren Geschwindigkeiten laufruhigen und spursicheren Fahrwerken konnte bisher weder mit diesen noch mit anderen Raupenfahrwerken befriedigt werden. Als gravierender Nachteil üblicher Gummiketten und Gurtbänder erweist sich insbesondere der Walkeffekt, der neben hohen inneren und äußeren Leistungsverlusten (durch Walken zwischen Umlaufelement und Umlenkrädern/Laufrollen bzw. zwischen Umlaufelement und Fahrbahn) erhebliche Bodenverdichtungen insbesondere auf verdichtungsempfindlichen, feuchten Böden durch wiederholtes Kneten bei jedem Laufrollendurchgang verursacht.

Aufgabe der Erfindung ist daher die Schaffung eines Raupenfahrwerkes, das die oben genannten Nachteile, insbesondere den Polygoneffekt von Gliederketten und Walkeffekt von Gummiketten und Gurtbändern, vermeidet und die komplexen Anforderungen von landwirtschaftlichen Anwendungen hinsichtlich Herstellkosten, Gewicht, Traktion, Rollwiderstand, Laufruhe, Boden- und Straßenschonung, Geschwindigkeit, Verschmutzungsunempfindlichkeit, Verschleißarmut und Instandsetzbarkeit weitgehend erfüllt.

Die Aufgabe wird erfindungsgemäß durch die Merkmale des Hauptanspruches gelöst. Weitere Ausgestaltungen der Erfindung sind in den Unteransprüchen beschrieben.

Die mit der Erfindung erzielbaren Vorteile sind insbesondere folgende:

Die Längskräfte zwischen Fahrbahn und Fahrwerk werden ausschließlich durch das endlose, ununterbrochen fortlaufend biegsame Zugelement, beispielsweise in Form eines Flachriemens mit hochfester Zugfasereinlage, auf die Antriebs- bzw. Umlenkräder übertragen. Seine Innenfläche wirkt nur mit den zylindrischen Antriebs- bzw. Umlenkrädern des Fahrwerkes zusammen, so daß sie entsprechend der gewünschten kraft- oder formschlüssigen Kraftübertragung gewählt werden kann und kein Polygoneffekt entsteht. Das Zugelement ist dadurch leicht, kostengünstig, betriebssicher, laufruhig, verlust- und verschleißarm ausführbar. Im Gegensatz zu bekannten Gummiketten oder Gurtbändern sind keine das Abrollen der Laufrollen verbessernde, aber Umlaufwiderstand, Laufruhe, Verschleiß oder Gewicht verschlechternde Längs- oder Querversteifungen erforderlich.

Die Vertikalkräfte zwischen Fahrbahn und Fahrwerk werden ausschließlich über die geteilten, biegesteifen Tragelemente auf die Laufrollen übertragen. Die Tragelemente bilden ähnlich wie die Laschen an Gliederketten eine segmentweise fortlaufende, walkfreie, verlust- und verschleißarme sowie verschmutzungsunempfindliche Laufbahn für die Laufrollen. Sie brauchen im Gegensatz zu den Laschen von Gliederketten keine Zugkräfte übertragen und keine Eingriffsteilung sicherstellen, so daß auch sie leicht und kostengünstig mit groben Toleranzen ausgeführt werden können. Nur bei tieferem Einsinken des Umlaufelementes auf nachgiebigen Fahrbahnen nehmen zusätzlich auch die Antriebs- bzw. Umlenkräder einen Teil der Vertikalkräfte auf.

Die Seitenkräfte zwischen Fahrbahn und Fahrwerk können in bekannter Weise durch ein- oder mehrreihig angeordnete, mit dem/den Zugelementen, den Tragelementen und/oder den Stollen verbundene Seitenführungen übertragen werden. Vorteilhaft können bei kurzen Fahrwerken die Seitenführungen ausschließlich mit den Umlenkrädern, bei langen Fahrwerken in üblicher Weise mit diesen und/oder mit den Laufrollen zusammenwirken.

Für eine gleichmäßige Übertragung der Längs- und Vertikalkräfte werden die Zug- und Tragelemente zweckmäßig symmetrisch angeordnet und durch Querverbindungen miteinander verbunden, beispielsweise eine mittige Reihe von Tragelementen und zwei außenliegende Zugelemente oder ein mittiges Zugelement und zwei außenliegende Reihen von Tragelementen. Ein seitlicher freier Zwischenraum zwischen den Zug- und Tragelementen erlaubt verschleiß- und verlustfreie Relativbewegungen zwischen Zug- und Tragelementen beim Umlauf, fördert die Selbstreinigung des Umlaufelementes und erleichtert die Schachtelung der Umlenkräder mit benachbarten Laufrollen.

Die Tragelemente sind untereinander bzw. mit den Querverbindungen durch Gelenke verbunden. Diese Gelenke übertragen, ebenso wie die Tragelemente selbst, keine Zugkräfte. Auch die Relativbewegungen in den Gelenken bei Beginn bzw. Ende des Umlaufes finden im längs- und vertikalkraftfreien Zustand statt, so daß auch die Gelenke leicht und kostengünstig mit groben Toleranzen, beispielsweise auch als verschleißfreie und kostengünstige elastische Verformungsgelenke ausgeführt werden können.

Die Anordnung der Stollen unter den Gelenken verhindert jeglichen Walkeffekt und in Verbindung mit gleichem Längsabstand von Laufrollen und Gelenken bzw. Stollen auch jegliche Lastschwankung und daraus resultierende dynamische Bodenverdichtungen, da in jeder Überrollposition auf jeden Stollen stets die gleiche, konstante Laufrollenlast wirkt. Die Konstanz des Bodendruckes während der gesamten Überrollung ist auch eine wichtige Voraussetzung zur Minimierung des äußeren Rollwiderstandes und zur Maximierung der Zugkraft des Raupenfahrzeuges auf nachgiebigen Fahrbahnen.

Die beschriebene Stollenkonfiguration bewirkt auf nachgiebigen Fahrbahnen niedrige effektive Bodendrücke und hohe Zugkräfte. Die quer zur Umlaufrichtung sehr breiten, in Umlaufrichtung aber schmalen und untereinander beabstandeten Stollen sinken aufgrund des ungefähr trapezförmigen Querschnittes so weit in den Boden ein, bis ein lokales Gleichgewicht mit relativ hohen örtlichen Kontaktdrücken erreicht ist. Diese Kontaktdrücke pflanzen sich aber bedingt durch die in Umlaufrichtung geringe Stollenabmessung und die Lücken zwischen benachbarten Stollen nur in geringe Tiefen fort, so daß im Gegensatz zu Luftreifen oder vollflächigen Gliederketten, Gummiketten oder Gurtbändern hohe Fahrwerklasten und/oder hohe Zugkräfte ohne schädliche Tiefenverdichtungen abgetragen werden können. Auf festen Fahrbahnen liegen die Stollen mit geringer Kontaktfläche und damit hohem Kontaktdruck auf, wodurch auf nassen, verschmutzten, verschneiten oder vereisten Fahrbahnen die Fahrsicherheit verbessert wird.

Für das Befahren unebener Fahrbahnen sind an den Laufrollen übliche Lastausgleichsmittel wie Pendelbrücken, parallelgeschaltete Gasfedern oder ähnliches erforderlich. Der tatsächliche Laufrollenabstand wird zweckmäßig geringfügig größer oder kleiner als der Gelenkabstand gewählt, um etwaige geringe Ungleichförmigkeiten beim gleichzeitigen Überrollen mehrerer Gelenkstellen zu vermeiden.

Die Teilung der Tragelemente kann in weiten Grenzen frei gewählt werden, da sie im Gegensatz zu Glieder- und Gummiketten ohne Einfluß auf das Umlaufverhalten des Umlaufelementes ist, das ausschließlich von dem fortlaufend biegsamen Zugelement bestimmt und damit frei von jedem Polygoneffekt ist. Insbesondere sind auch bei begrenzten Umlenkrad-Durchmessern relativ lange, kosten-, bodendruck- und traktionsgünstige Tragelemente möglich, die bei Glieder- oder Gurtketten zu unbeherrschbar kleinen Zähnezahlen der Antriebsräder führen würden.

Ferner ist es vorteilhaft, die Gelenke der Tragelemente an den Querverbindern so weit gegenüber der neutralen Faser des Zugelementes nach außen höhenversetzt anzuordnen, daß im Umlauf um die Kreiskontur der Umlenkräder die Sekantenlänge der Tragelemente gleich der Bogenlänge der zugehörigen Zugelementabschnitte wird. Im Umlauf um die Umlenkräder treten dann bis auf minimale Ein- und Auslauf-Abweichungen keine Längendifferenzen zwischen dem fortlaufend biegsamen Zugelement und den geteilten, biegesteifen Tragelementen auf. Die geringen Ein- und Auslauf-Längendifferenzen können durch einfache Maßnahmen wie Drehgelenke mit Langloch oder Verformungsgelenke mit Längselastizität aufgenommen werden.

Die einendige Anbindung der Stollen an die Tragelemente ergibt ein unsymmetrisches Laufverhalten. Bei schiebender Anordnung werden die Stollen auf nachgiebigen Fahrbahnen bei Eingriffsbeginn mit einer der Fahrtrichtung entgegengesetzten Schwenkbewegung in den Boden gedrückt. Dadurch wird der Boden an der die Zugkraft übertragenden Stollenflanke vorverdichtet, so daß jeder in Eingriff kommende Stollen sofort ohne Schlupf Zugkraft überträgt. An der Auslaufseite wird der Stollen verlustfrei nahezu ohne Schwenkbewegung senkrecht von der Fahrbahn abgehoben. Müssen auf nachgiebigen Fahrbahnen keine hohen Zugkräfte übertragen werden, kann es vorteilhaft sein, das Umlaufelement mit schleppenden Stollen aufzulegen. Durch die Schwenkbewegung im Auslauf werden Oberflächenverdichtungen aufgebrochen und für die Wasserhaltung günstige, Spurerosion vermeidende Oberflächenunebenheiten geschaffen.

Bei Straßenfahrt soll aus Verschleißgründen die Schwenkbewegung der Stollen auf der Fahrbahn bei Ein- oder Auslauf möglichst gering sein. Dies läßt sich bei erfindungsgemäßen Fahrwerken unabhängig von schiebender oder schleppender Anordnung auf einfache Weise durch leichtes Überdrücken der Laufrollen erreichen, so daß die Stollen unter einem kleinen Winkel und damit nur geringer Schwenkbewegung ein- und auslaufen.

Insgesamt ermöglicht ein erfindungsgemäßes Fahrwerk einen einfachen, leichten herstell- und betriebskostengünstigen, reparaturfreundlichen Aufbau, laufruhige, sichere, fahrbahnschonende, rollwiderstands- und verschleißarme schnelle Straßenfahrt sowie abseits der Straße wesentlich günstigere Werte für effektiven Bodendruck, Schlupf, Zugkraft und Fahrwerkwirkungsgrad als bisherige Gliederketten, Gummiketten oder Gurtbänder.

Eine hinsichtlich Herstellkosten, Bodendruck und Traktion wünschenswerte große Teilung der Tragelemente führt jedoch beim Umlauf um die Umlenkräder zu großen Gelenkabwinklungen und Längenänderungen im Umlaufelement sowie zu großen Längsabständen für die mit den Laufrollen zusammenwirkenden Seitenführungen. Daraus können sich Nachteile hinsichtlich Lebensdauer und Betriebssicherheit solcher Raupenfahrwerke ergeben.

Um diesbezüglich eine erhöhte Betriebssicherheit und längere Lebensdauer des Raupenfahrwerkes sowie einen geräusch- und vibrationsfreien Umlauf des Umlaufelementes zu schaffen, wird erfindungsgemäß vorgesehen, daß jedes Tragelement an seinem einen Ende mit einem Längenausgleich versehen und an seinem anderen Ende mit dem Stollen verbunden ist. Dabei ist es vorteilhaft, wenn der Längenausgleich als elastisches Verformungselement ausgebildet ist, das quer zur Gelenkachse einen vorzugsweise nach innen gerichteten und radial oberhalb des zugeordneten Gelenkes liegenden Höhenversatz aufweist. In dieser Anordnung werden die Längs- und Querkräfte aus den Stollen direkt über die benachbarten Drehgelenke in das Umlaufelement übertragen, während die den elastischen Verformungselementen benachbarten Drehgelenke nur Vertikalkräfte aus den Laufrollenlasten und aus den Stützmomenten der Stollen-Längskräfte übertragen müssen. Die beim Ein- und Auslauf des Umlaufelementes an den Umlenkrädern entstehenden geometrisch bedingten Längendifferenzen sowie etwaige Längentoleranzen zwischen Zug- und Tragelementen werden dadurch ausgeglichen, daß die elastischen Verformungselemente zusammen mit den benachbarten Drehgelenken Pendelstützen bilden, die bei radialer Anordnung ausschließlich Zug- oder Druckkräfte übertragen. Da in dieser Ausführung trotz des erforderlichen Längenausgleiches alle Drehgelenke spielfrei ausgebildet werden können, ergibt sich eine besonders einfache, mit groben Längentoleranzen herstellbare, verschmutzungs- und verschleißsichere und geräusch- und vibrationsfreie Anordnung.

Für Umlaufelemente mit als Verformungsgelenken ausgebildeten Tragelement-Gelenken wird vorgeschlagen, daß die elastischen Verformungsgelenke an den direkt mit den Zugelementen verbundenen Stollen angeschlossen sind und einen auch als Längenausgleich wirkenden und vorzugsweise radial angeordneten elastischen Verformungsbereich aufweisen. In dieser Anordnung werden die Längs- und Querkräfte der Stollen direkt in das Zugelement übertragen und die Tragelemente nehmen keine Längskräfte oder Stützmomente, sondern nur Vertikalkräfte aus den Laufrollenlasten auf. Daher können die Verformungsgelenke an beiden Enden der Tragelemente so ausgebildet werden, daß sie die für die Umlaufabwinklungen erforderliche Biegung und zusätzlich die bereits oben beschriebenen Längenabweichungen aufnehmen können. Damit werden alle auftretenden Relativbewegungen im Umlaufelement ausschließlich durch elastische Verformungen aufgenommen, womit sich trotz gelenkiger Anordnung eine völlig verschmutzungs- und verschleißfreie Ausführung ergibt. Auch hier stellt die radiale Ausrichtung des Verformungsbereiches sicher, daß in diesem nur Druckkräfte wirken.

Besonders einfache und kostengünstige Tragelemente ergeben sich, wenn diese, wie vorgeschlagen, einschließlich ihrer elastischen Verformungsgelenke, Verformungselemente und/oder Drehgelenke einstückig ausgebildet sind. Hierfür bieten sich Polymerwerkstoffe an, die einerseits die erforderlichen elastischen Verformungen zulassen und andererseits ausreichende Verschleißfestigkeit aufweisen, wie z.B. Polyamide oder Polyethylene.

Festigkeits- und Verschleißverhalten der Verformungsgelenke, Verformungselemente und Drehgelenke können wesentlich verbessert werden, wenn diese keine Querkräfte übertragen müssen. Hierzu wird vorgeschlagen, daß Seitenführungselemente mit Längsabstand untereinander an dem oder den Zugelementen angeordnet sind und mit Gleitkufen zusammenwirken, die an Trägern der Laufrollen angeordnet sind und deren Länge vorzugsweise größer als der Längsabstand der Laufrollen ist. Dadurch werden die Seitenführungskräfte direkt aus dem Umlaufelement in die Laufrollenträger übertragen. Auch bei großen Längsabständen der Seitenführungselemente und/oder der Laufrollen ist dabei eine kontinuierliche Seitenkraftübertragung sichergestellt. Zusätzlich wird das sonst beim Zusammenwirken der Seitenführungen mit den Laufrollen mögliche Aufklettern der Laufrollen auf die Seitenführungen und das anschließende Aus spuren und Abwerfen des Umlaufelementes zuverlässig vermieden. Außerdem hat sich gezeigt, daß die beim Abstützen der Seitenführungskräfte an den Laufrollen auftretende epizykloidale Reibarbeit größer sein kann als die rein lineare beim Abstützen an Gleitkufen.

Im folgenden ist die Erfindung an Hand von Ausführungsbeispielen näher dargestellt und beschrieben. Es zeigen:
- **Figur 1**: die Seitenansicht eines Fahrwerkes,
- **Figur 2a**: die Draufsicht gemäß Pfeil A in Figur 1, wobei das Umlaufelement aus 1 Zugelement und 2 Reihen Tragelementen besteht,
- **Figur 2b**: die Seitenansicht zu Figur 2a,
- **Figur 3**: die Draufsicht gemäß Pfeil A in Figur 1, wobei das Umlaufelement aus 2 Zugelementen und 1 Reihe Tragelementen besteht,
- **Figur 4**: die Seitenansicht eines Tragelementes mit Drehgelenken und einendig mit den Tragelementen verbundenen Stollen,
- **Figur 5**: die Seitenansicht eines Tragelementes mit Verformungsgelenken und mit dem Zugelement verbundenen Stollen und
- **Figur 6**: den Querschnitt gemäß Kreis B in Figur 1 eines Umlaufelementes gemäß Figur 2.

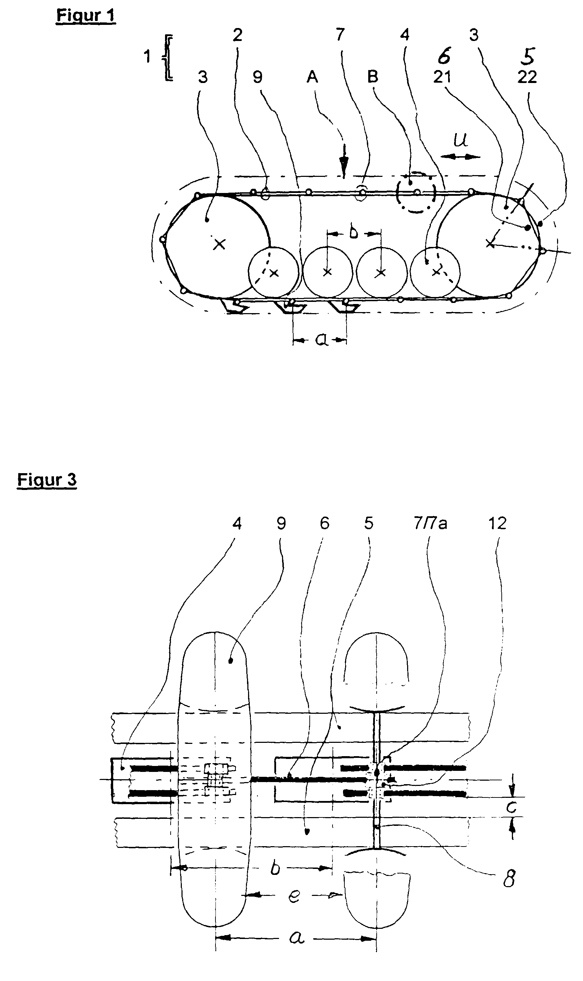

Gemäß Figur 1 umschlingt bei einem Raupenfahrwerk ein endloses oder endlos gemachtes Umlaufelement 2 in der Umlaufrichtung U mindestens zwei Umlenkräder 3 und mehrere, zwischen diesen angeordnete Laufrollen 4. Übliche, hier nicht dargestellte Spanneinrichtungen sowie Antriebs- und/oder Bremsmittel können auf mindestens eines der Umlenkräder 3 wirken. Übliche, hier nicht dargestellte Seitenführungselemente können an dem Umlaufelement 2 angeordnet sein und mit den Umlenkrädern 3 und/oder den Laufrollen 4 zusammenwirken.

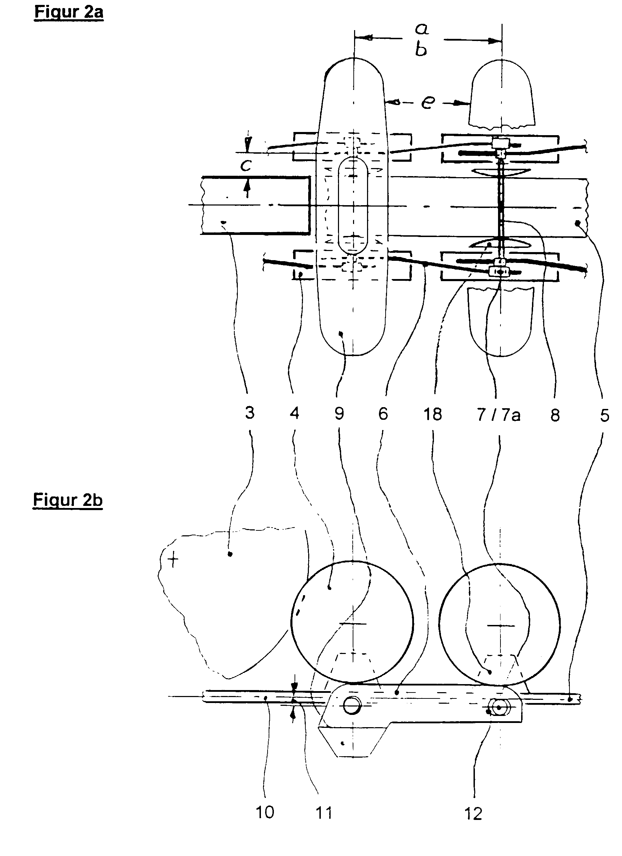

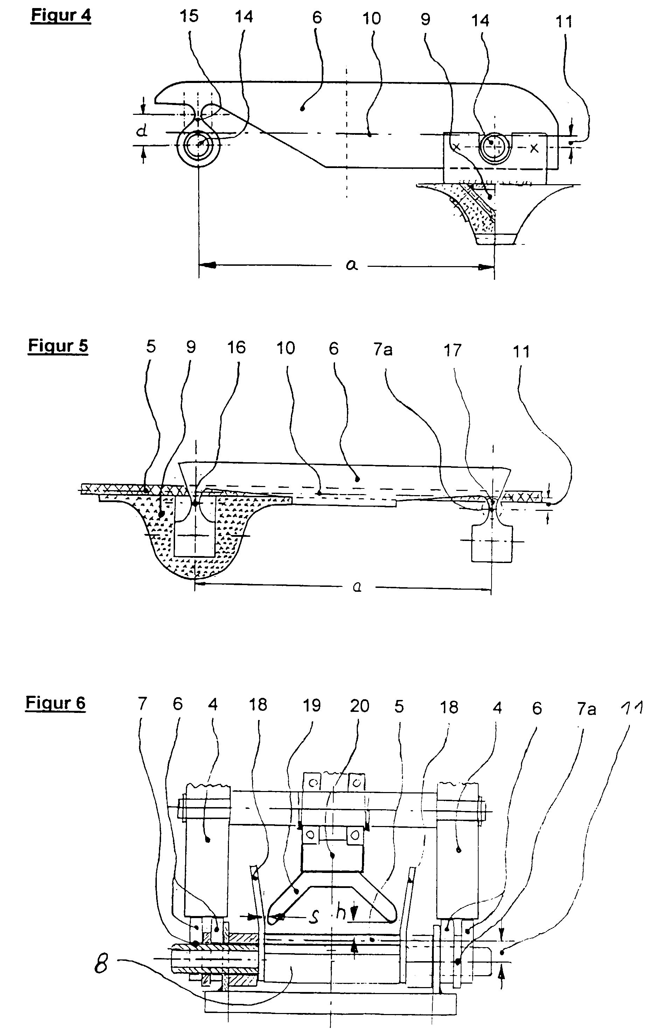

Das Umlaufelement 2 besteht aus einem Zugelement 5 (Figur 2a) oder aus zwei Zugelementen 5 (Figur 3) sowie einer oder mehreren Reihen von Tragelementen 6, die untereinander und/oder mit den Zugelementen 5 über Gelenke 7 verbunden sind. Das oder die kontinuierlich flexiblen Zugelemente 5 wälzen sich beim Umlauf auf den zylindrischen Umlenkrädern 3 ab. Vertikallasten werden von den Laufrollen 4 auf die biegesteifen Tragelemente 6 und von diesen direkt oder über die Gelenke 7 auf einendig mit den Tragelemente 6 verbundene Stollen 9 und von dort auf die hier nicht dargestellte Fahrbahn übertragen.

Seitlich mit freiem Zwischenraum c zu den Zugelementen 5 sind eine (Figur 3) bzw. mehrere (Figur 2) Reihen von biegesteifen Tragelementen 6 angeordnet, die über Gelenke 7 an Querverbindungen 8 mit den Zugelementen 5 verbunden sind und mit Laufrollen 4 zusammenwirken. Der Längsabstand a der Gelenke 7 bzw. der Querverbindungen 8 entspricht dem Längsabstand b der Laufrollen 4. Unter den Querverbindungen 8 sind Stollen 9 im wesentlichen quer zur Umlaufrichtung U und mit zwischen ihnen liegenden Freiräumen e angeordnet. Sie können an den Zugelementen 5, an den Querverbindungen 8 oder - vorzugsweise einendig - an den Tragelementen 6 fest oder auswechselbar durch bekannte Mittel wie Schrauben, Niete oder Schnappverbindungen bzw. Klebung oder Vulkanisation befestigt sein. Die Querverbindungen 8 sind ebenfalls mit bekannten Mitteln fest oder auswechselbar an dem bzw. den Zugelementen 5 angeordnet.

Als Werkstoff für die Stollen 9 wird zweckmäßig Gummi oder Polyurethan verwendet. Die Stollen 9 können auch, wie hier nicht näher dargestellt, aus Rumpfstollen geringer Breite und/oder Höhe und auswechselbaren Aufsätzen bestehen, die zum Befahren von Grünland-, Sumpf- oder Sandflächen auch keine oder nur geringe Freiräume e aufweisen können.

Durch die Zwischenräume c zwischen den Zugelementen 5 als Laufbahnen der Umlenkräder 3 und den Tragelementen 6 als Laufbahnen der Laufrollen 4 können erste und letzte Laufrollen 4 überlappend mit den Umlenkrädern 3 angeordnet werden (siehe Figur 1).

Die Gelenke 7 sind an den Querverbindungen 8 so angeordnet, daß die Gelenkachsen 7a gegenüber der neutralen Faser 10 des Zugelementes 5 einen Höhenversatz 11 aufweisen. Als neutrale Faser 10 ist dabei diejenige Schicht des Zugelementes 5 zu verstehen, die beim Umlauf um die Umlenkräder 3 keine biegebedingten Längenänderungen erfährt. In der Regel ist dies die Mittelebene der Zugfasereinlagen des Zugelementes 5. Der Höhenversatz 11 ist so bemessen, daß im Umlauf um die zylindrischen Umlenkräder 3 die Bogenlänge 22 der zwischen den Querverbindern 8 liegenden Abschnitte des Zugelementes 5 gleich der Sekantenlänge 21 der Tragelemente 6 ist (Figur 1).

Zum Ausgleich der geometrisch bedingten geringfügigen Längenänderungen beim Ein- und Auslauf der Zugelemente 5 auf den Umlenkrädern 3 sowie etwaiger Längentoleranzen im Umlaufelement 2 können die Gelenke 7 und/oder die Tragelemente 6 einen Längenausgleich 12 aufweisen, der in Figur 2b als Langloch im Tragelement 6 dargestellt ist.

Bei Umlaufelementen 2 mit als Drehgelenk 14 ausgebildeten Gelenken 7 (Figur 4) ist das Tragelement 6 an einem Ende mit dem Stollen 9 verbunden. Am gegenüberliegenden Ende ist ein elastisches Verformungselement 15 mit einem Höhenversatz d radial über dem Drehgelenk 14 angeordnet, so daß umlauf- oder toleranzbedingte Änderungen des Längsabstandes a zwischen den beiden Drehgelenken 14 durch Verbiegung des Verformungselementes 15 bzw. Verdrehung des Drehgelenkes 14 aufgenommen werden. In Figur 4 bilden Bohrungen in dem Tragelement 6 und Zapfen der hier nicht näher dargestellten Querverbindungen 8 die Drehgelenke 14. Die Verformungselemente 15 können bei elastischen Werkstoffen wie Polyamid oder Polyethylen direkt aus den Tragelementen 6 ausgeformt sein, wodurch diese insgesamt einstükkig hergestellt werden können.

Bei Umlaufelementen 2 mit als elastische Verformungsgelenke 16 ausgebildeten Gelenken 7 (Figur 5) können die Stollen 9 direkt mit dem Zugelement 5 verbunden sein und die Funktion der Querverbindungen 8 übernehmen. Die Tragelemente 6 weisen an beiden Enden je ein elastisches Verformungsgelenk 16 auf, dessen freies Ende verdrehfest mit dem Stollen 9 verbunden ist. Etwaige Längenabweichungen zwischen den Gelenken 16 werden in dem sich radial erstreckenden elastischen Verformungsbereich 17 aufgenommen. Der Gelenkpunkt 7a kann in der Mitte des elastischen Verformungsbereiches 17 angenommen werden. Er weist den Höhenversatz 11 gegenüber der neutralen Faser 10 des Zugelementes 5 auf. Auch hier können Tragelement 6 und elastische Verformungsgelenke 16 einstückig ausgeformt werden.

Gleitkufen 19 sind an Trägern 20 der Laufrollen 4 so angeordnet (Figur 6), daß sie einen geringen seitlichen Abstand s zu Seitenführungselementen 18 und einen geringen Höhenabstand h zu dem Zugelement 5 haben. Dadurch wird auch bei großem Längsabstand der Seitenführungselemente 18 eine kontinuierliche Abstützung der Querkräfte mit geringstmöglichen Kippmoment erreicht. Dabei sind die Seitenführungselemente 18 paarig an den Querverbindungen 8 angeschlossen, die einerseits mit dem Zugelement 5 verbunden sind und andererseits an ihren Enden über die Gelenke 7 die Tragelemente 6 aufnehmen, auf denen die Laufrollen 4 abrollen. Die Gelenkachsen 7a sind gegenüber der neutralen Faser 10 des Zugelementes 5 mit dem Höhenversatz 11 angeordnet.

## Patentansprüche

1. Raupenfahrwerk (1) für insbesondere landwirtschaftliche Fahrzeuge zum Betrieb auf und abseits von Straßen, mit einem endlosen, um zumindest zwei Umlenkräder (3) geführten Umlaufelement (2), das zumindest ein endloses, fortlaufend biegsames, mit den Umlenkrädern (3) zusammenwirkendes Zugelement (5) sowie parallel dazu zumindest eine Reihe einzelner, jeweils biegesteif ausgebildeter Tragelemente (6) aufweist, auf denen sich zumindest zwei in Umlaufrichtung (U) hintereinander angeordnete Laufrollen (4) abstützen, **dadurch gekennzeichnet,** daß jedes Tragelement (6) jeweils an seinem in Umlaufrichtung (U) gesehen vorderen und hinteren Ende über je ein Gelenk (7) an einem die fortlaufende Biegsamkeit des Zugelementes (5) nicht behindernden, quer zur Umlaufrichtung (U) fest oder auswechselbar an dem zumindest einen Zugelement (5) angeordneten Querverbindung (8) gelagert ist,
und daß im Bereich jedes Gelenkes (7) ein sich im wesentlichen quer zur Umlaufrichtung (U) erstreckender Stollen (9) angeordnet ist.

2. Raupenfahrwerk nach Anspruch 1, **dadurch gekennzeichnet,** daß die Gelenke (7) gegenüber der neutralen Faser (10) des Zugelementes (5) senkrecht zur Gelenkachse (7a) und zur Umlaufrichtung (U) einen nach außen gerichteten Höhenversatz (11) aufweisen. (Figur 3)

3. Raupenfahrwerk nach Anspruch 1 oder 2, **dadurch gekennzeichnet,** daß die Tragelemente (6) mit freiem Zwischenraum (c) quer neben dem bzw. den Zugelementen (5) angeordnet sind.

4. Raupenfahrwerk nach Anspruch 1, 2 oder 3, **dadurch gekennzeichnet,** daß der Längsabstand (a) der Gelenke (7) bzw. der Stollen (9) dem Längsabstand (b) der Laufrollen (4) entspricht.

5. Raupenfahrwerk nach einem oder mehreren der vorhergehenden Ansprüche, **dadurch gekennzeichnet,** daß jeweils zwei in Umlaufrichtung (U) benachbarte Tragelemente (6) ein gemeinsames Gelenk (7) aufweisen.

6. Raupenfahrwerk nach einem oder mehreren der vorhergehenden Ansprüche, **dadurch gekennzeichnet,** daß in Umlaufrichtung (U) gesehen mindestens jedes zweite Gelenk (7) in einem in Längsrichtung des Tragelementes (6) wirkenden Längenausgleich (12; 15) des bzw. der Tragelemente (6) gelagert ist.

7. Raupenfahrwerk nach einem oder mehreren der vorhergehenden Ansprüche, **dadurch gekennzeichnet**, daß zumindest ein Gelenk (7) jedes Tragelementes (6) als Drehgelenk (14) ausgebildet ist. (Figur 4)

8. Raupenfahrwerk nach Anspruch 6 oder 7, **dadurch gekennzeichnet,** daß der Längenausgleich als elastisches Verformungselement (15) ausgebildet ist, das quer zur Gelenkachse (7a) einen vorzugsweise nach innen gerichteten und radial oberhalb des zugeordneten Gelenkes (14; 16) liegenden Höhenversatz (d) aufweist. (Figuren 4 und 5)

9. Raupenfahrwerk nach einem oder mehreren der Ansprüche 1 bis 6 oder 8, **dadurch gekennzeichnet,** daß zumindest ein Gelenk (7) jedes Tragelementes (6) als elastisches Verformungsgelenk (16) ausgebildet ist. (Figur 5)

10. Raupenfahrwerk nach Anspruch 9, **dadurch gekennzeichnet,** daß jedes elastische Verformungsgelenk (16) drehfest mit dem ihm zugeordneten Stollen (9) verbunden ist, der am Zugelement (5) befestigt ist und die Querverbindung (8) bildet.

11. Raupenfahrwerk nach einem oder mehreren der vorhergehenden Ansprüche, **dadurch gekennzeichnet,** daß jeder Stollen (9) einendig mit den Tragelementen (7) verbunden ist.

12. Raupenfahrwerk nach Anspruch 6 und einem der Ansprüche 7 bis 11, **dadurch gekennzeichnet,** daß jedes Tragelement (6) an seinem einen Ende mit einem Längenausgleich versehen und an seinem anderen Ende mit dem Stollen (9) verbunden ist. (Figur 4)

13. Raupenfahrwerk nach einem der Ansprüche 7 bis 12, **dadurch gekennzeichnet,** daß das Tragelement (6) mit dem ihm zugeordneten Dreh- oder Verformungsgelenk (14; 16) und Verformungselementen (15) einstückig ausgebildet ist.

14. Raupenfahrwerk nach einem oder mehreren der vorhergehenden Ansprüche, **dadurch gekennzeichnet,** daß an dem oder den Zugelementen (5) in deren Längsrichtung Seitenführungselemente (18) mit Längsabstand voneinander angeordnet sind und mit Gleitkufen (19) zusammenwirken, die an Trägern (20) der Laufrollen (4) angeordnet sind. (Figur 6)

15. Raupenfahrwerk nach Anspruch 14, **dadurch gekennzeichnet,** daß die Gleitkufen (19) nur einen geringen Höhenabstand (h) zum Zugelement (5) aufweisen.

16. Raupenfahrwerk nach Anspruch 14 oder 15, **dadurch gekennzeichnet,** daß jede Gleitkufe (19) nur einen geringen seitlichen Abstand (s) von dem ihr zugeordneten Seitenführungselement (18) aufweist.

17. Raupenfahrwerk nach Anspruch 14, 15 oder 16, **dadurch gekennzeichnet,** daß die Länge jeder Gleitkufe (19) größer ist als der Längsabstand (b) benachbarter Laufrollen (4).

## Claims

1. A tracklaying truck (1) in particular for agricultural vehicles for on- and off-road operation, comprising an endless circulating member (2) which is guided around at least two deflection wheels (3) and comprises at least one endless, continuously bendable tension member (5) interacting with the deflection wheels (3) as well as at least one row, parallel with said tension member (5), of individual bend-resistant supporting members (6), on which there are supported at least two idler rollers (4) arranged one behind the other in the direction of circulation (U),
characterised in that each supporting member (6) is mounted at each of its ends, front and rear when viewed in the direction of circulation (U), via a joint (7) on a cross-tie (8) which does not hinder the continuous bendability of the tension member (5) and is arranged fixedly or replaceably on the at least one tension member (5) at right angles to the direction of circulation (U), and in that a grouser (9) extending substantially at right angles to the direction of circulation (U) is arranged in the area of each joint (7).

2. A tracklaying truck according to claim 1, characterised in that the joints (7) exhibit an outwardly directed height misalignment (11) with respect to the neutral fibre (10) of the tension member (5) and perpendicularly to the joint axis (7a) and the direction of circulation (U) . (Figure 3)

3. A tracklaying truck according to claim 1 or claim 2, characterised in that the supporting members (6) are arranged with a free space (c) obliquely adjacent the tension member(s) (5).

4. A tracklaying truck according to claim 1, claim 2 or claim 3, characterised in that the longitudinal spacing (a) of the joints (7) or the grousers (9) corresponds to the longitudinal spacing (b) of the idler rollers (4).

5. A tracklaying truck according to any one of the preceding claims, characterised in that a common joint (7) is associated with every two supporting members (6) adjacent in the direction of circulation (U).

6. A tracklaying truck according to any one of the preceding claims, characterised in that, when viewed in the direction of circulation (U), at least every second joint (7) is mounted in a length compensator (12; 15) of the supporting member(s) (6), said length compensator (12; 15) acting in the longitudinal direction of the supporting member (6).

7. A tracklaying truck according to any one of the preceding claims, characterised in that at least one joint (7) of each supporting member (6) takes the form of a swivel joint (14). (Figure 4).

8. A tracklaying truck according to claim 6 or claim 7, characterised in that the length compensator takes the form of a resilient deformation member (15), which, at right angles to the joint axis (7a), exhibits a preferably inwardly directed height misalignment (d) radially above the associated joint (14; 16). (Figures 4 and 5).

9. A tracklaying truck according to any one of claims 1 to 6 or 8, characterised in that at least one joint (7) of each supporting member (6) takes the form of a resilient deformation joint (16). (Figure 5)

10. A tracklaying truck according to claim 9, characterised in that each resilient deformation joint (16) is connected non-rotatably to the grouser (9) associated therewith, which is fixed to the tension member (5) and forms the cross-tie (8).

11. A tracklaying truck according to any one of the preceding claims, characterised in that each grouser (9) is connected at one end with the supporting members (7).

12. A tracklaying truck according to claim 6 and any one of claims 7 to 11, characterised in that each supporting member (6) is provided at one end with a length compensator and connected at the other end with the grouser (9). (Figure 4)

13. A tracklaying truck according to any one of claims 7 to 12, characterised in that the supporting member (6) is constructed in one piece with the associated swivel or deformation joint (14; 16) and deformation members (15).

14. A tracklaying truck according to any one of the preceding claims, characterised in that lateral guide members (18) are arranged spaced lengthwise from each other on the tension member(s) (5) in the longitudinal direction thereof and interact with runners (19) arranged on supports (20) of the idler rollers (4). (Figure 6)

15. A tracklaying truck according to claim 14, characterised in that the runners (19) are spaced heightwise by only a small amount (h) from the tension member (5).

16. A tracklaying truck according to claim 14 or claim 15, characterised in that each runner (19) is at only a small lateral distance (s) from the lateral guide member (18) associated therewith.

17. A tracklaying truck according to claim 14, claim 15 or claim 16, characterised in that the length of each runner (19) is greater than the longitudinal spacing (b) of adjacent idler rollers (4).

## Revendications

1. Train de roulement à chenille (1), en particulier pour véhicules agricoles, destiné à fonctionner sur et hors route, comprenant un élément circulant (2) sans fin, qui est guidé sur au moins deux roues de renvoi (3) et comprend au moins un élément de traction (5) sans fin, flexible sur toute sa longueur, coopérant avec les roues de renvoi (3) ainsi que, parallèlement à ce dernier, au moins une rangée d'éléments porteurs (6) individuels réalisés chacun rigide en flexion et sur lesquels s'appuient au moins deux galets de roulement (4) disposés l'un derrière l'autre dans la direction de circulation (U), caractérisé en ce qu'à chacune de ses extrémités avant et arrière relativement à la direction de circulation (U) chaque élément porteur (6) est supporté par l'intermédiaire d'une articulation respective (7) sur une liaison transversale (8) agencée de manière fixe ou interchangeable sur l'au moins un élément de traction (5) transversalement à la direction de circulation (U) et n'entravant pas la flexibilité de l'élément de traction (5) sur toute sa longueur, et en ce que dans la zone de chaque articulation (7) est disposé un crampon (9) s'étendant en direction sensiblement transversale à la direction de circulation (U).

2. Train à chenille selon la revendication 1, caractérisé en ce que les articulations (7) présentent par rapport à la fibre neutre (10) de l'élément de traction (5) un décalage en hauteur (11) dirigé vers l'extérieur perpendiculairement à l'axe d'articulation (7a). (Figure 3.)

3. Train à chenille selon la revendication 1 ou 2, caractérisé en ce que les éléments porteurs (6) sont disposés à côté du ou des éléments de traction (5) avec un intervalle transversal libre (c).

4. Train à chenille selon la revendication 1, 2 ou 3, caractérisé en ce que la distance longitudinale (a) des articulations (7) et respectivement des crampons (9) correspond à la distance longitudinale (b) des galets de roulement (4).

5. Train à chenille selon une ou plusieurs des revendications précédentes, caractérisé en ce que chaque paire d'éléments porteurs (6) voisins dans la direction de circulation (U) présente une articulation commune (7).

6. Train à chenille selon une ou plusieurs des revendications précédentes, caractérisé en ce que vu selon la direction de circulation (U) au moins une articulation sur deux (7) est supportée dans un compensateur de longueur (12; 15) du ou des éléments porteurs (6), qui agit dans la direction longitudinale de l'élément porteur (6).

7. Train à chenille selon une ou plusieurs des revendications précédentes, caractérisé en ce qu'au moins une articulation (7) de chaque élément porteur (6) est réalisée sous la forme d'articulation pivotante (14) (figure 4).

8. Train à chenille selon la revendication 6 ou 7, caractérisé en ce que le compensateur de longueur est réalisé sous la forme d'un élément de déformation élastique (15) qui présente transversalement à l'axe de l'articulation (7a) un décalage en hauteur (d) qui est de préférence dirigé vers l'intérieur et situé radialement au-dessus de l'articulation associée (14; 16) (figures 4 et 5).

9. Train à chenille selon une ou plusieurs des revendications 1 à 6 ou 8, caractérisé en ce qu'au moins une articulation (7) de chaque élément porteur (6) est réalisée sous la forme d'une articulation par déformation élastique (16) (figure 5).

10. Train à chenille selon la revendication 9, caractérisé en ce que chaque articulation par déformation élastique (16) est liée en rotation avec le crampon qui lui est associé (9), lequel est fixé à l'élément de traction (5) et constitue la liaison transversale (8).

11. Train à chenille selon une ou plusieurs des revendications précédentes, caractérisé en ce que chaque crampon (9) est relié par une extrémité commune avec l'élément porteur (7).

12. Train à chenille selon la revendication 6 et l'une des revendications 7 à 11, caractérisé en ce que chaque élément porteur (6) est muni à sa première extrémité d'un compensateur de longueur, et relié à son autre extrémité avec le crampon (9) (figure 4).

13. Train à chenille selon l'une des revendications 7 à 12, caractérisé en ce que l'élément porteur (6) est réalisé d'une seule pièce avec les éléments de déformation (15) et l'articulation pivotante ou de déformation (14; 16) qui lui est associée.

14. Train à chenille selon une ou plusieurs des revendications précédentes, caractérisé en ce que des éléments de guidage latéraux (18) sont agencés à distance longitudinale entre eux sur le ou les éléments de traction (5) dans leur direction longitudinale, et coopèrent avec des patins (19) qui sont disposés sur des supports (20) des galets de roulement (4) (figure 6).

15. Train à chenille selon la revendication 14, caractérisé en ce que les patins (19) ne sont qu'à distance en hauteur réduite (h) de l'élément de traction (5).

16. Train à chenille selon la revendication 14 ou 15, caractérisé en ce que chaque patin (19) n'est qu'à une distance latérale réduite (s) de l'élément de guidage latéral qui lui est associé (18).

17. Train à chenille selon la revendication 14, 15 ou 16, caractérisé en ce que la longueur de chaque patin (19) est supérieure à la distance longitudinale (b) des galets de roulement voisins (4).
